# FASCICULE DE BREVET EUROPEEN

(11) **EP 1 301 896 B1**
(45) Date de publication et mention de la délivrance du brevet: **25.01.2006**
(21) Numéro de dépôt: 01947519.3
(22) Date de dépôt: 19.06.2001
(51) Int. Cl.: G06K 9/32

(54) **SEGMENTATION D'UNE IMAGE NUMERIQUE D'UN OBJET POSTAL PAR LA TRANSFORMATION DE HOUGH**
SEGMENTIERUNG EINES DIGITALEN BILDES VON EINEM POSTOBJEKT DURCH HOUGH-TRANSFORMATION
SEGMENTATION OF A POSTAL OBJECT DIGITAL IMAGE BY HOUGH TRANSFORM

(30) Priorité: 27.06.2000 FR 0008246
(43) Date de publication de la demande: 16.04.2003
(73) Titulaire: Solystic, 94257 Gentilly Cedex (FR)
(72) Inventeur: ARCAS-LUQUE, Gilles, F-92220 Bagneux (FR); PIETRI, Olivier, F-06250 MOUGINS (FR)
(74) Mandataire: Prugneau, Philippe
(86) Numéro de dépôt international: PCT/FR2001/001902
(87) Numéro de publication internationale: WO 2002/001489

(56) Documents cités:
- US-A- 5 054 098
- YU B ET AL: "A ROBUST AND FAST SKEW DETECTION ALGORITHM FOR GENERIC DOCUMENTS" PATTERN RECOGNITION,US,PERGAMON PRESS INC. ELMSFORD, N.Y, vol. 29, no. 10, 1 octobre 1996 (1996-10-01), pages 1599-1629, XP000633789 ISSN: 0031-3203
- WILLARD K: "AN APPROACH TO THE AUTOMATIC RETRIEVAL OF LATENT FINGERPRINTS" PROCEEDINGS CARNAHAN CONFERENCE ON CRIME COUNTERMEASURES,XX,XX, 7 mai 1975 (1975-05-07), pages 45-51, XP000614256

## Description

L'invention concerne un procédé de traitement d'une image numérique d'un objet postal en vue de lire automatiquement une adresse postale sur ledit objet par application d'un algorithme de reconnaissance automatique d'adresses sur ladite image.

Un tel procédé est plus particulièrement destiné à la lecture automatique d'adresse postale sur des paquets postaux dans un processus de tri automatique de paquets postaux. La lecture automatique d'adresses sur des objets postaux du type lettre est réalisée classiquement par un convoyage sur chant de chaque lettre pour la faire passer devant une caméra de façon à saisir une image numérique de la lettre qui peut ensuite être binarisée et filtrée. Généralement, les lignes de caractères constituant une adresse postale à lire automatiquement sur une lettre sont disposées parallèlement au pied de la lettre ou perpendiculairement à celui-ci, c'est à dire parallèlement à un bord de l'image, de sorte qu'un algorithme de reconnaissance automatique d'adresses peut être appliqué directement sur une partie rectangulaire de l'image numérique en décodant les caractères dans l'image suivant la direction donnée par un bord de l'image.

Les objets postaux du type paquet sont des objets généralement volumineux qui sont convoyés à plat sur un tapis. Avec ce type de convoyage et ce type d'objets postaux, il n'est plus possible de lire automatiquement une adresse postale dans une image numérique d'un paquet en se basant sur une direction privilégiée des lignes d'adresse fournie par une référence prédéterminée dans l'image.

Le but de l'invention est de proposer une solution au problème du traitement d'images numériques de paquets postaux en vue de lire automatiquement une adresse postale sur chaque paquet.

A cet effet, l'invention a pour objet un procédé de traitement d'une image numérique d'un objet postal en vue de lire automatiquement une adresse postale sur ledit objet par application d'un algorithme de reconnaissance automatique d'adresses sur ladite image, caractérisé_en ce qu'il consiste à diviser l'image en blocs d'image de taille identique, à appliquer sur chaque bloc d'image un traitement à base d'une transformation de Hough pour identifier dans le bloc d'image considéré une direction privilégiée de la distribution des points d'image dans ledit bloc considéré, à regrouper des blocs d'image contigus dans l'image et ayant une direction privilégiée commune pour définir une zone d'intérêt rectangulaire dans laquelle est inscrit le regroupement desdits blocs contigus ayant une direction privilégiée commune de telle façon que cette zone d'intérêt rectangulaire a un bord longitudinal parallèle à ladite direction privilégiée commune, et à appliquer l'algorithme de reconnaissance automatique d'adresses sur ladite zone d'intérêt de l'image en vue de lire automatiquement une adresse postale.

Avec ce procédé, on obtient une zone d'intérêt rectangulaire qui s'étend longitudinalement parallèlement aux lignes de caractères d'une adresse postale de sorte qu'il est possible en suivant le bord longitudinal de cette zone d'intérêt d'appliquer un algorithme de reconnaissance automatique d'adresses sur la partie de l'image numérique correspondant à cette zone d'intérêt même si les lignes de l'adresses postales dans l'image numérique ne sont pas orientées suivant un bord de l'image numérique comme c'est le cas pour un objet postal du type lettre.

Un exemple de mise en oeuvre du procédé selon l'invention est décrit plus en détail et illustré par les dessins annexés.
La figure 1 est un organigramme simplifié qui illustre les étapes du procédé selon l'invention.
La figure 2 est une représentation schématique d'une image numérique d'un paquet comprenant une adresse postale.
La figure 3 est une représentation schématique de l'image d'un paquet de la figure 2 mais partitionnée en blocs d'image constituant des imagettes.
La figure 4 est une représentation schématique d'un groupe d'imagettes contenant les informations de l'adresse postale du paquet de la figure 2.
La figure 5 est une représentation schématique de la zone d'intérêt de l'image de la figure 2 qui est formée à partir du groupe d'imagettes de la figure 4.
La figure 6 illustre le principe de la transformation de Hough sur une imagette.

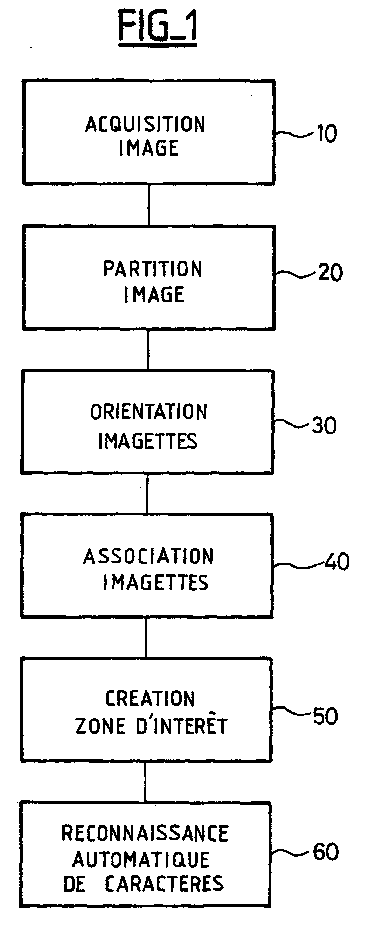

La figure 1 illustre de façon très schématique sous la forme d'un organigramme une partie d'un processus de tri de paquets postaux incluant des étapes d'un traitement d'images numériques des paquets en vue de lire automatiquement sur chaque paquet postal une adresse postale qui servira dans le processus de tri à diriger automatiquement le paquet considéré vers une sortie de tri correspondante.

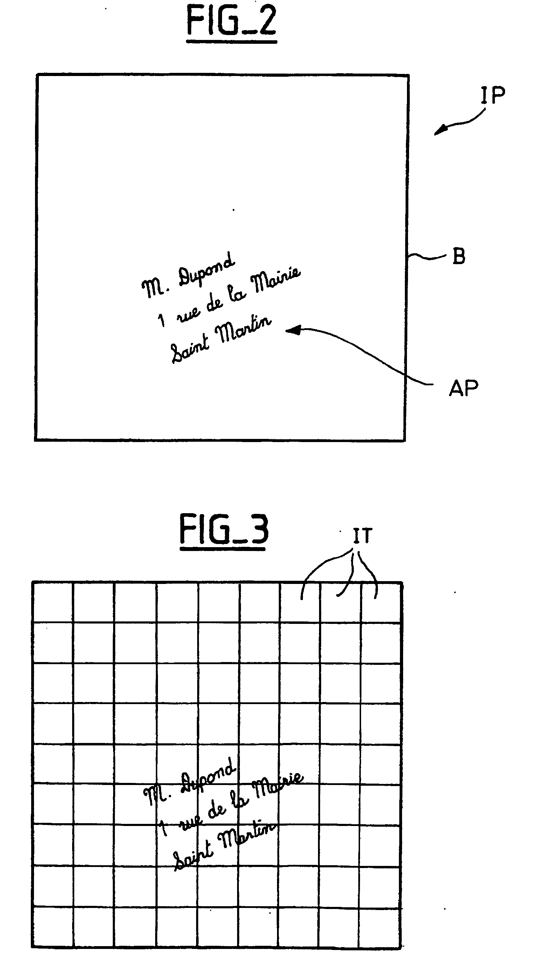

En 10, un paquet convoyé à plat sur un tapis mobile passe sous une caméra qui saisit une image numérique du paquet. En se référant à la figure 2 dans laquelle on a représenté schématiquement une image numérique IP d'un paquet comprenant une adresse postale AP on peut remarquer que dans cette image, les lignes de l'adresse postale AP ne sont pas inscrites selon des lignes parallèles au bord de l'image. D'une manière générale, une telle image numérique a fait l'objet d'opérations telles que binarisation, suppression des pixels noirs isolés, de telles opérations étant destinées à réduire la taille du fichier informatique correspondant et à retirer les données parasites et inutiles figurant dans l'image initiale. Ainsi, cette image qui était initialement définie par des pixels en nuances de gris, sera réduite à des points noirs ou blancs, ces points pouvant symboliser selon le type de traitement, un pixel, un groupement de pixel, ou encore toute autre réduction des pixels de l'image initiale. De cette façon, l'image initiale pourra par exemple être réduite à une suite de coordonnées, chaque couple de coordonnées définissant un point noir de l'image.

Selon le procédé de l'invention, à l'étape 20, l'image numérique IP (binarisée et filtrée) est divisée ou partitionnée en blocs d'image identiques appelés par la suite imagettes. En se référant à la figure 3, on a représenté l'image de la figure 1 partitionnée en 72 imagettes IT, chaque imagette étant de forme carrée.

L'objectif de cette étape de partitionnement est d'identifier dans chaque imagette, en 30 une direction privilégiée de la répartition des points de couleur noire dans chaque imagette. Plus particulièrement, la direction privilégiée d'une imagette correspond à la direction d'une ou plusieurs lignes sur lesquelles sont inscrits des caractères dans l'imagette, et cette direction privilégiée sera identifiée par l'application d'un algorithme à chaque imagette. Pour que le résultat de l'application de cet algorithme soit pertinent, il est important que la taille des imagettes corresponde approximativement à la taille d'un mot, ou à la taille de plusieurs caractères. Concrètement, les imagettes pourront par exemple être des carrés de 2cm par 2cm sur le paquet. Un algorithme d'identification dans une imagette d'une direction privilégiée sera présenté et détaillé plus bas. Ainsi, à l'issue de l'étape 30, on connaît pour chaque imagette une direction privilégiée, qui correspond généralement à la direction de lignes de caractères de l'imagette, ou à une direction perpendiculaire à ces lignes.

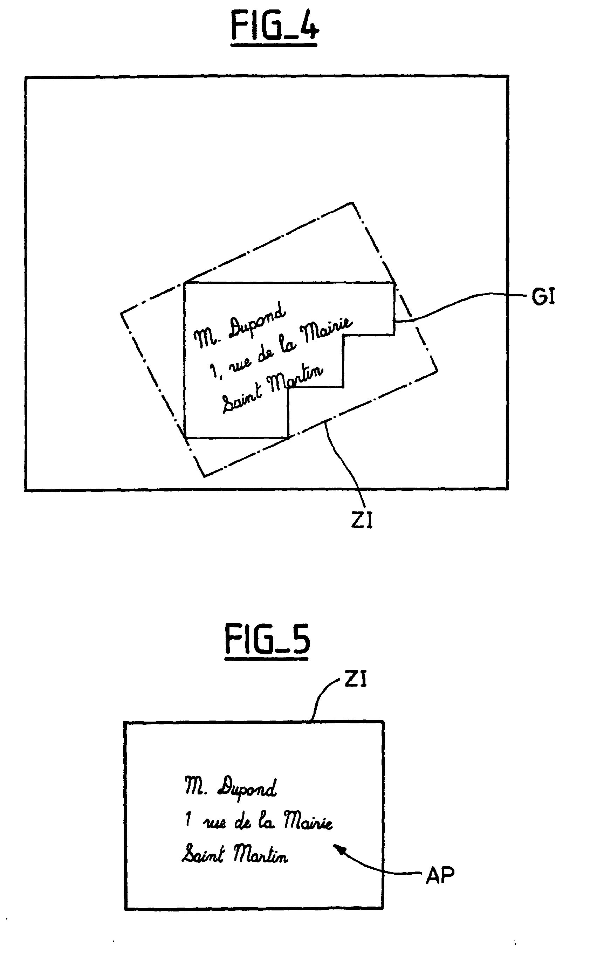

En 40, on réalise un ou plusieurs groupes d'imagettes selon le critère que les directions privilégiées des imagettes d'un groupe sont sensiblement parallèles ou sensiblement perpendiculaires, et que ces imagettes sont contiguës. Dans la figure 4, on a représenté le groupe d'imagettes GI qui a été identifié avec le procédé selon l'invention dans l'image IP. Comme on peut le voir, ce groupe d'imagettes comprend l'adresse AP, mais n'a pas encore été mis en forme de rectangle.

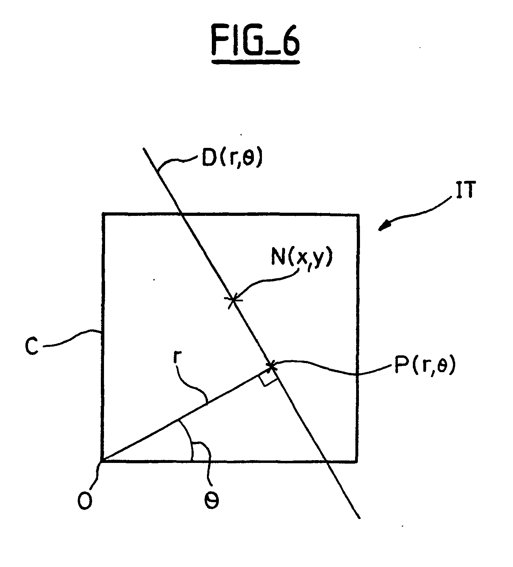

En 50, on réalise les zones d'intérêt associées à chaque groupe d'imagette issu de l'étape 40. Pour un groupe d'imagettes, on va d'abord calculer la direction privilégiée la plus courante ou commune parmi les imagettes de ce groupe et associer cette direction privilégiée au groupe d'imagettes, puis calculer le rectangle de plus petite taille comprenant toutes les imagettes du groupe d'imagettes et ayant un bord parallèle à la direction privilégiée du groupe d'imagettes, de manière à déterminer la zone d'intérêt correspondant au groupe d'imagettes considéré. En se référant aux figures 4 et 5, on peut voir la zone d'intérêt ZI qui a été établie à partir de l'image IP, et qui comprend l'adresse de destinataire inscrite selon des lignes parallèles au bord inférieur du rectangle formé par la zone d'intérêt ZI. Plus particulièrement la figure 5 est une représentation de la zone d'intérêt ZI, telle qu'elle a été extraite de l'image numérique IP, avec le procédé selon l'invention au niveau de l'étape 50.

La ou les zones d'intérêt identifiées en 50 seront ensuite examinées en 60 par un algorithme de reconnaissance automatique de caractère, selon la direction privilégiée associée à chaque zone d'intérêt, pour extraire du paquet l'adresse postale cherchée.

Un algorithme de détection dans une imagette d'une direction privilégiée, tel qu'utilisé en 30 pourra commencer par l'application à cette imagette d'une transformation de Hough polaire. La transformation de Hough, qui est décrite de façon détaillée dans l'ouvrage « B. YU & A.K.JAIN Robust fast squew and detection algorithm for generic documents, Pattem Recognition Vol 29 n° 10, page 1609 », permet d'établir un tableau polaire, à partir d'une imagette, ce tableau polaire donnant pour un certain nombre de droites de l'imagette, le nombre de points noirs contenus dans chacune de ces droites. Dans un tel tableau polaire qui a deux entrées (r,θ), chaque couple (r,θ) correspond à une droite D(r,θ), la valeur du tableau polaire pour un couple (r,θ) particulier correspondant au nombre de points noirs que contient la droite D(r,θ). Dans la figure 6 on a représenté une imagette IT qui est un carré de côté C, dans laquelle on peut voir que la droite D(r,θ) contenant le point noir N(x,y) est la droite qui passe par le point P(r,θ), et qui est perpendiculaire au vecteur OP(r,θ), O désignant l'origine d'un repère associé à l'imagette. Plus particulièrement, le vecteur OP(r,θ) est un vecteur ayant pour module r, et pour angle polaire θ. Pour une imagette carrée, de côté C, munie d'un repère centré sur le sommet inférieur gauche de l'image, l'ensemble des droites interceptant cette imagette carrée est inclus dans l'ensemble des droites D(r,θ) vérifiant -C < r ≤ C.√2 et 0° ≤ θ < 180°.

Ainsi, dans une imagette de 2cm par 2cm, telle que représentée dans la figure 6, pour laquelle on décide de discrétiser les données par pas de 2mm pour les rayons, et par pas de 10° pour les angles, on pourra construire un tableau polaire ayant 24 colonnes, chaque colonne correspondant à une valeur de rayon, et 18 lignes, chaque ligne correspondant à une valeur angulaire. Ce tableau, qui sera initialisé de manière à valoir 0 pour tous les couples (r,θ), sera ensuite progressivement rempli, à partir de chaque point noir N(x,y) de l'imagette, avec la relation r = x.cos(θ) + y.sin(θ) (*) :

Pour un point noir N(x,y), on va calculer la valeur prise par r pour θ = 0° (avec la relation (*)), on va arrondir cette valeur de r à 2mm près, conformément à la discrétisation choisie, pour former un couple (r(0°),0°). Puis on va ajouter 1 dans la case de coordonnées (r(0°),0°) du tableau polaire de l'imagette. Cette opération devra être effectuée ensuite pour θ = 10°, 20°, 30°...170°.

On devra effectuer cette suite d'opérations pour chaque point noir que comprend l'imagette pour constituer le tableau polaire de l'imagette. Le tableau polaire ainsi obtenu donne alors pour chaque couple (r,θ), le nombre de points noirs que comprend la droite D(r,θ), cette droite étant en l'occurrence une bande de 2mm de large, compte tenu de la discrétisation choisie.

Pour extraire de ce tableau polaire la direction privilégiée correspondante de l'imagette, on va calculer pour chaque angle θ la somme s²(θ), qui est la somme des carrés des termes de toute la ligne du tableau polaire, puis choisir l'angle 9 pour lequel s²(θ) est maximale.

L'angle α correspondant à la direction privilégiée de l'imagette vaut alors α = θ + 90°. En effet, si par exemple une telle imagette est constituée de deux points noirs alignés selon une droite orientée à 120°, on a s²(30°) = 2² = 4, et s²(θ) = 1²+1² = 2 pour θ ≠ 30°, et par suite, la direction privilégiée fournie par l'apptication de cet algorithme à cette imagette sera α = 120°.

Comme on peut le voir, un algorithme basé sur la transformation de Hough est performant pour détecter une direction privilégiée de la distribution des points dans une image, mais ne fournit pas de données sur la localisation des points de l'image, ce qui est insuffisant pour identifier des zones d'intérêt dans l'image d'un paquet postal. En partitionnant l'image en imagettes selon le procédé de l'invention, avant d'appliquer à chaque imagette un tel algorithme, on obtient une analyse de l'image qui fournit suffisamment d'informations pour constituer des zones d'intérêt rapidement exploitables par un algorithme de reconnaissance automatique d'adresses.

## Revendications

1. Un procédé de traitement d'une image numérique (IP) d'un objet postal en vue de lire automatiquement une adresse postale (AP) sur ledit objet par application d'un algorithme de reconnaissance automatique d'adresses sur ladite image, **caractérisé en ce qu'**il consiste à diviser (20) l'image en blocs d'image de taille identique, à appliquer (30) sur chaque bloc d'image un traitement à base d'une transformation de Hough pour identifier dans le bloc d'image considéré une direction privilégiée de la distribution des points d'image dans ledit bloc considéré, à regrouper (40) des blocs d'image contigus dans l'image et ayant une direction privilégiée commune pour définir (50) une zone d'intérêt rectangulaire (ZI) dans laquelle est inscrit le regroupement desdits blocs contigus ayant une direction privilégiée commune de telle façon que cette zone d'intérêt rectangulaire a un bord longitudinal parallèle à ladite direction privilégiée commune, et à appliquer l'algorithme de reconnaissance automatique d'adresses sur ladite zone d'intérêt de l'image en vue de lire automatiquement une adresse postale.

## Claims

1. A method for processing a digital image (IP) of a postal object for the purpose of automatically reading a postal address (AP) on the said object by application of an automatic address recognition algorithm to the said image, the method being **characterized in that** it consists in dividing (20) the image into image blocks of identical size, applying (30) a process based on a Hough transform to each image block to identify in the image block concerned a favoured direction of the distribution of the image points in the said block concerned, grouping (40) contiguous image blocks in the image having a common favoured direction to form (50) a rectangular area of interest (ZI) in which the grouping of the said contiguous blocks having a common favoured direction is entered in such a way that this rectangular area of interest has one longitudinal edge parallel to the said common favoured direction, and applying the automatic address recognition algorithm to the said area of interest of the image for the purpose of automatically reading a postal address.

## Patentansprüche

1. Verfahren für eine Bearbeitung eines digitalen Bildes (IP) eines postalischen Gegenstandes im Hinblick auf ein automatisches Lesen einer postalischen Adresse (AP) auf dem Gegenstand durch Anwenden eines automatischen Erkennungs-Algorithmus von Adressen auf dem Bild,
**dadurch gekennzeichnet,**
**daß** es umfaßt:
ein Einteilen (20) des Bildes in Bildblöcke von identischer Größe,
ein Anwenden (30) einer auf einer Hough-Transformation basierenden Bearbeitung auf jeden Bildblock, um in dem betrachteten Bildblock eine bevorzugte Richtung der Verteilung der Bildpunkte zu identifizieren,
ein Rückgruppieren (40) der in dem Bild benachbarten und eine gemeinsame bevorzugte Richtung aufweisenden Bildblöcke, um eine rechteckige Interessens-Zone (ZI) zu definieren (50), in der die Rückgruppierung der benachbarten, eine gemeinsame bevorzugte Richtung aufweisenden Blöcke derart eingeschrieben ist, daß diese rechteckige Interessens-Zone eine zu der bevorzugten gemeinsamen Richtung parallele Längskante aufweist, und
ein Anwenden des automatischen Erkennungs-Algorithmus von Adressen auf die Interessens-Zone des Bildes im Hinblick auf ein automatisches Lesen einer postalischen Adresse.
